# EUROPÄISCHE PATENTSCHRIFT

(11) **EP 2 625 082 B1**
(45) Veröffentlichungstag und Bekanntmachung des Hinweises auf die Patenterteilung: **15.11.2017**
(21) Anmeldenummer: 11767660.1
(22) Anmeldetag: 15.09.2011
(51) Int. Cl.: B60W 50/08

(54) **VERFAHREN UND INFORMATIONSSYSTEM ZUR INFORMATION EINES FAHRZEUGFÜHRERS ÜBER BEDINGUNGEN EINES GEPLANTEN ÜBERHOLVORGANGES**
METHOD AND INFORMATION SYSTEM FOR INFORMING A VEHICLE DRIVER ABOUT CONDITIONS OF A PLANNED PASSING MANEUVER
PROCÉDÉ ET SYSTÈME D'INFORMATION POUR COMMUNIQUER À UN CONDUCTEUR DE VÉHICULE DES INFORMATIONS SUR LES CONDITIONS D'UN DÉPASSEMENT PRÉVU

(30) Priorität: 07.10.2010 DE 102010042115
(43) Veröffentlichungstag der Anmeldung: 14.08.2013
(73) Patentinhaber: Robert Bosch GmbH, 70442 Stuttgart (DE)
(72) Erfinder: HUELBUSCH, Katja, 31139 Hildesheim (DE)
(86) Internationale Anmeldenummer: PCT/EP2011/065987
(87) Internationale Veröffentlichungsnummer: WO 2012/045558

(56) Entgegenhaltungen:
- EP-A1- 2 060 466
- WO-A1-2010/099789
- DE-A1-102004 029 860
- DE-A1-102005 036 794
- DE-A1-102010 046 599
- DE-C1- 3 622 447

## Beschreibung

Die Erfindung bezieht sich auf ein Verfahren zur Information eines Fahrzeugführers über Bedingungen eines bevorstehenden Überholvorganges gemäß dem Oberbegriff des Patentanspruches 1.

### Stand der Technik

Bei Überholvorgängen kann es vorkommen, dass das überholende Fahrzeug nur eine geringfügig höhere Geschwindigkeit hat als das überholte Fahrzeug. Dadurch dauert aber ein Überholvorgang unter Umständen sehr lange. Eine solche Situation tritt besonders häufig bei Lastkraftwagen auf. Aus diesem Grund wird auch immer wieder über die Einführung weiterer Überholverbote für Lastkraftwägen diskutiert. Daneben tritt eine solche Situation für Personenkraftwagen auch häufig in Ländern auf, in denen es auch auf Autobahnen eine generelle Geschwindigkeitsbegrenzung gibt. Außerdem ist die Länge, d.h. die Zeitdauer eines Überholvorganges aufgrund von Unerfahrenheit und Unsicherheit insbeonsdere von nicht geübten Fahrern oder bei Benutzung eines unbekannten Fahrzeuges schwierig, da im Hinblick auf das Beschleunigungsvermögen, die relative Geschwindigkeit usw. Einschätzungsschwierigkeiten bestehen können. Außerdem kann Leichtsinn zu einer Zugrundelegung einer zu kurzen Überholdauer führen.

Aus der DE 102 55 331 A1 ist ein Informationssystem zur Information eines Fahrzeugführers über Eigenschaften von Streckenabschnitten einer Fahrtroute bekannt, die von einem Fahrzeugstandort aus in Fahrtrichtung vor dem Fahrzeug liegen, mit Mitteln zur Bestimmung des Fahrzeugstandortes, mit Mitteln zur Bestimmung von Streckenabschnitten einer Fahrtroute, die von dem Fahrzeugstandort aus in Fahrtrichtung vor dem Fahrzeug liegen, und von Eigenschaften der Streckenabschnitte, mit Mitteln zur Ausgabe der Eigenschaften oder von die Eigenschaften beschreibenden Informationen an den Fahrzeugführer, welches sich dadurch auszeichnet, dass die Eigenschaften für Überholvorgänge relevante Eigenschaften der Streckenabschnitte umfassen. Hiermit wird eine frühzeitige Information eines Fahrzeugführers über auf seiner Fahrstrecke liegende Überholmöglichkeiten und damit eine vorausschauende und entspannte Fahrweise des Fahrzeugführers, die zur allgemeinen Verkehrssicherheit beiträgt, ermöglicht. Bei diesem aus dem Stand der Technik bekannten Informationssystem werden nur statische Bedingungen, nämlich zukünftige Streckeneigenschaften berücksichtigt. Dynamische Bedingungen, wie die anderen Verkehrsteilnehmer werden nicht berücksichtigt.

Aus der DE 36 22 447 C ist ein Verfahren zur Information eines Fahrzeugführers über Bedingungen eines bevorstehenden Überholvorganges bekannt, wobei eine Geschwindigkeit eines vorausfahrenden Fahrzeuges ermittelt wird und mit einer Geschwindigkeit eines Fahrzeuges des Fahrzeugführers vergliechen wird, eine Überholdauer abgeschätzt und/oder berechnet wird und diese dem Fahrzeugführer in aufbereiteter Form angezeigt wird.

Die EP-A-2 060 466 A offenbart ein Verfahren zur Information eines Fahrzeugführers über Bedingungen eines bevorstehenden Überholvorganges, wobei eine Geschwindigkeit eines vorausfahrenden Fahrzeuges ermittelt wird und mit einer Geschwindigkeit eines Fahrzeuges des Fahrzeugführers vergleichen wird, eine relative Geschwindigkeit abgeschätzt und/oder berechnet wird und diese dem Fahrzeugführer angezeigt wird.

### Offenbarung der Erfindung

Der Erfindung liegt ausgehend hiervon die Aufgabe zugrunde, bei einem Verfahren der eingangs genannten Art auch Informationen über die Eigenschaften anderer Verkehrsteilnehmer für den Fahrer bereitzustellen, um ihn bei (geplanten) Überholvorgängen zu unterstützen.

Diese Aufgabe wird durch die im Anspruch 1 angegebene Merkmalskombination, sowie durch eine Vorrichtung und ein Computerprogrammprodukt mit Merkmalen der nebengeordneten Ansprüche gelöst.

Vorteilhafte Ausgestaltungen und Weiterbildungen sind Gegenstand von Unteransprüchen.
Gemäß der vorliegenden Erfindung wird ein Verfahren zur Information eines Fahrzeugführers über Bedingungen eines bevorstehenden Überholvorganges bereitgestellt, bei dem eine Geschwindigkeit eines vorausfahrenden Fahrzeuges ermittelt wird und mit einer Geschwindigkeit eines Fahrzeuges des Fahrzeugführers verglichen wird. Hieraus wird dann eine Überholdauer abgeschätzt und/oder berechnet. Diese Information kann dann dem Fahrzeugführer direkt angezeigt werden.
Gemäß der vorliegenden Erfindung kann dem Fahrer eines Fahrzeuges, beispielsweise eines Lastkraftwagens angezeigt werden, wie groß das Delta zwischen seiner Geschwindigkeit und der eines anderen Fahrzeuges ist.
In einer besonders bevorzugten Ausgestaltung der vorliegenden Erfindung wird die Geschwindigkeit beider Fahrzeuge zu mehreren Messzeitpunkten n bestimmt, aus diesen Werten ein Mittelwert gebildet wird und mittels dieser Mittelwerte eine Dauer des Überholvorganges beziehungsweise eine relative Geschwindigkeit ermittelt.
Dies hat sich insbesondere deshalb als vorteilhaft erwiesen, da das Delta zwischen einer Geschwindigkeit des Fahrzeuges eines Fahrzeugführers und der eines anderen Fahrzeuges nicht statisch ist. Ein Entscheidungsprozess "Überholen oder nicht" kann beispielsweise mehrere Sekunden oder mehr in Anspruch nehmen. Die Bestimmung der relativen Geschwindigkeit beziehungsweise des Deltas zwischen den Geschwindigkeiten beider Fahrzeuge erfolgt daher vorzugsweise über Vorausinterpolation, um auch Beschleunigung und/oder Abbremsen zu berücksichtigen und eine Vorausschau zu ermöglichen. Ist eine ermittelte relative Geschwindigkeit gering oder gar zu gering, sollte zumindest dies dem Fahrzeugführer deutlich angezeigt werden. Aus diesem Grund kann eine nicht erfindungegemässe Ampeldarstellung eingesetzt werden, die folgende Anzeigen macht:
- GRÜN: Überholen unkritisch
- GELB: Überholen kritisch
- ROT: Überholen gefährlich oder nicht sinnvoll
Mit einem erfindungsgemäßen Verfahren kann die Sicherheit aller beteiligten Verkehrsteilnehmer erhöht werden, da gefährliche Überholprozesse vermieden werden können. Dies ist insbesondere darauf zurückzuführen, dass der Fahrzeugführer durch die Information die Fahrsituation besser einschätzen kann und dadurch eine verbesserte Grundlage zur Entscheidungsfindung bezüglich des Überholens erhält.
Aus diesem Grund wird nicht nur die Sicherheit der Personen im überholenden Fahrzeug, sondern auch der Personen im überholten Fahrzeug sowie der Fahrzeuge in der Umgebung und von Passanten erhöht.
Um eine möglichst sichere Entscheidung zu fällen ist es gemäß einer bevorzugten Ausführungsform vorgesehen, dass die Darstellung für den Fahrzeugführer eine relative Geschwindigkeit und eine voraussichtliche Überholdauer umfasst.

Um eine optimale Anpassung an Veränderungen zu erhalten, sollten die relative Geschwindigkeit und die voraussichtliche Überholdauer kontinuierlich berechnet werden.
Aus den obigen Ausführungen ist erkennbar, dass die Anwendung des Verfahrens nach der Erfindung sehr breit ist. Für Lastkraftwagen kann sie insbesondere bei Überholvorgängen auf zweispurigen Fahrbahnen, wie beispielsweise Autobahnen hilfreich sein. Hierdurch können extrem lange Überholvorgänge vermieden werden, die nicht sinnvoll sind.
Zusätzlich zur bisher beschrieben Information können bei einem Verfahren gemäß der vorliegenden Erfindung auch noch Informationen über die Geschwindigkeit beispielsweise nachfolgender Fahrzeuge mit aufgenommen werden. So ist es beispielsweise denkbar, wenn von hinten sehr schnelle Fahrzeuge kommen, dass dies dem Fahrzeugführer ebenfalls angezeigt wird.

Auch die Verkehrsdichte und/oder die Straßensituation (Kurven, Wetter) können beispielsweise noch bei der Ampeldarstellung berücksichtigt werden. Hierzu können am Fahrzeug Sensoren oder Kameras vorgesehen sein oder es können auch Informationen von Verkehrsmeldungen verwendet werden.
Insbesondere für Personenkraftwagen ist auch eine Anwendung für einspurige Straßen, wie beispielsweise Landstraßen denkbar. So kann beispielsweise die Überholdauer berechnet werden, diese dann direkt mit der Sicht (Wetter, Straßenführung) abgeglichen werden und gegebenenfalls die Länge des Überholvorganges in einer Karte angezeigt werden. Des Weiteren kann eine Kamera direkt entgegenkommende Fahrzeuge auf der Strecke identifizieren und bei Gefahr anzeigen.
Weiterhin kann auch eine Empfehlung gegeben werden, dass die Geschwindigkeit für einen Überholvorgang erhöht werden soll. Dabei kann die maximal erlaubte oder maximal mögliche Geschwindigkeit des Fahrzeuges auch berücksichtigt werden, beziehungsweise bei Überschreiten dieser ein Warnhinweis gegeben werden.
Weiterhin ist es auch denkbar, dass die zukünftige Routenführung derart berücksichtigt wird, dass beispielsweise in dem Fall, in dem in naher Zukunft ein Abbiegen oder ein Abfahren von einer Straße vorgesehen ist, dies auch angezeigt wird.
Gemäß der vorliegenden Erfindung wird auch ein Informationssystem, insbesondere ein Navigationssystem zur Information eines Fahrzeugführers über Bedingungen eines bevorstehenden Überholvorganges bereitgestellt, wobei Mittel für eine Messung einer Geschwindigkeit eines vorausfahrenden Fahrzeuges vorgesehen sind und ferner Mittel zum Vergleichen einer Geschwindigkeit eines Fahrzeuges des Fahrzeugführers vorgesehen sind und diese miteinander verglichen werden, und ferner Mittel vorgesehen sind, die eine Überholdauer abschätzen und/oder berechnen sowie Mittel zur direkten Anzeige dieser Überholdauer an einen Fahrzeugführer Darüberhinaus wird gemäß der vorliegenden Erfindung auch ein Computerprogrammprodukt vorgeschlagen, das Programmteile zum Ausführen eines oben näher beschriebenen Verfahrens und eine maschinenlesbare, insbesondere computerlesbare, Datenstruktur, erzeugt durch ein oben näher beschriebenes Verfahren und/oder durch mindestens ein Computerprogrammprodukt aufweist.

Ein Ausführungsbeispiel der Erfindung wird nachstehend anhand der Zeichnung näher erläutert. Es zeigt hierbei

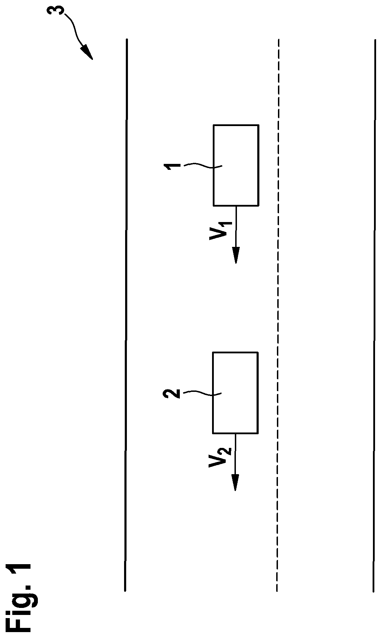

Fig. 1 ein Verfahren der vorliegenden Erfindung gemäß einer bevorzugten Ausführungsform.

In der Figur 1 sind zwei Fahrzeuge 1 und 2 dargestellt, die sich auf einer Straße 3 mit den Geschwindigkeiten v1 beziehungsweise v2 fortbewegen.

Da die Geschwindigkeit des Fahrzeuges 1, v1, höher ist als die Geschwindigkeit des Fahrzeuges 2, v2, könnte es sein, dass der Führer des Fahrzeugs 1 das Fahrzeug 2 überholen möchte.

Um nun den Fahrzeugführer des Fahrzeuges 1 bei seiner Entscheidungsfindung zu unterstützen, werden die Geschwindigkeiten der beiden Fahrzeuge1, 2 verglichen. So werden zu n Messzeitpunkten die Geschwindigkeiten beider Fahrzeuge 1, 2 bestimmt. Für das Fahrzeug 1 des Fahrzeugführers erfolgt dies in herkömmlicher Weise über den sogenannten Tachometer. Die Geschwindigkeit des vorausfahrenden Fahrzeuges 2 kann beispielsweise über eine Abstandsmessung erfolgen. Dies kann mittels eines an sich bekannten strahlenabgebenden Verfahrens, wie Radar oder ähnlichen, durchgeführt werden. Diese Messungen werden in sehr kurzen zeitlichen Abständen wiederholt. Aus der Kenntnis des zeitlichen Abstandes und des jeweiligen Abstandes der Fahrzeuge kann dann die Geschwindigkeit eines vorausfahrenden Fahrzeuges ermittelt werden.

Eine solche Geschwindigkeitsmessung kann, falls erwünscht, auch für ein nachfolgendes Fahrzeug erfolgen.

Aus den Messungen zu n Messzeitpunkten wird über eine Vorausinterpolation die jeweils voraussichtliche Geschwindigkeit für m zukünftige Zeitpunkte ermittelt. Erfindungsgemäss wird dem Fahrer die abgeschätzte und/oder berechnete Überholdauer direkt angezeigt. Der Mittelwert der zukünftigen Geschwindigkeit für die Dauer des Überholvorganges wird dem Fahrer als relative Geschwindigkeit oder eine daraus abgeleitete Information, wie beispielsweise die erwähnte Ameldarstellung oder andere, informativ zur Verfügung gestellt. Hierbei erfolgen vorzugsweise während des Fahrens kontinuierliche Updates über Neuberechnungen.
Die Speicherung der Daten, wie der gemessenen Geschwindigkeitsdaten erfolgt dabei vorzugsweise in einem Speicher des Fahrzeuges, beispielsweise eines Navigations- oder auch eines Mautgerätes des Fahrzeuges. Die Verarbeitung der Daten durch den oder die Prozessoren erfolgt in dem entsprechenden Gerät.
Die Mensch-Maschine-Kommunikation erfolgt wiederum über die Ausgabebeziehungsweise Bedieneinheit des entsprechenden Gerätes.

## Patentansprüche

1. Verfahren zur Information eines Fahrzeugführers über Bedingungen eines bevorstehenden Überholvorganges, wobei eine Geschwindigkeit eines vorausfahrenden Fahrzeuges ermittelt wird und mit einer Geschwindigkeit eines Fahrzeuges des Fahrzeugführers verglichen wird, eine Überholdauer abgeschätzt und/oder berechnet wird und diese dem Fahrzeugführer direkt angezeigt wird.

2. Verfahren nach Anspruch 1, wobei die Geschwindigkeit beider Fahrzeuge zu mehreren Messzeitpunkten n bestimmt wird, aus diesen Werten ein Mittelwert gebildet wird und mittels dieser Mittelwerte eine Dauer des Überholvorganges beziehungsweise eine relative Geschwindigkeit ermittelt wird.

3. Verfahren nach einem der vorhergehenden Ansprüche, wobei eine Darstellung für den Fahrzeugführer eine relative Geschwindigkeit und eine voraussichtliche Überholdauer umfasst.

4. Verfahren nach Anspruch 3 wobei die relative Geschwindigkeit und/oder die voraussichtliche Überholdauer kontinuierlich berechnet werden.

5. Informationssystem zur Information eines Fahrzeugführers über Bedingungen eines bevorstehenden Überholvorganges, wobei Mittel für eine Messung einer Geschwindigkeit eines vorausfahrenden Fahrzeuges vorgesehen sind und ferner Mittel zum Vergleichen einer Geschwindigkeit eines Fahrzeuges des Fahrzeugführers vorgesehen sind und diese Geschwindigkeiten miteinander verglichen werden, und ferner Mittel vorgesehen sind, die eine Überholdauer abschätzen und/oder berechnen sowie Mittel zur direkten Anzeige dieser Überholdauer an einen Fahrzeugführer.

6. Computerprogrammprodukt, aufweisend Programmteile zum Ausführen eines Verfahrens nach mindestens einem der voranstehenden Ansprüche 1.

7. Maschinenlesbarer, insbesondere computerlesbarer, Datenträger, auf dem mindestens ein Computerprogrammprodukt gemäß Anspruch 6 aufgezeichnet und/oder gespeichert ist.

## Claims

1. Method for providing information to a vehicle driver about conditions of an imminent overtaking manoeuvre, wherein a velocity of a vehicle travelling ahead is determined and compared with a velocity of a vehicle of the vehicle driver, an overtaking period being estimated and/or calculated, and said overtaking period being displayed directly to the vehicle driver.

2. Method according to Claim 1, wherein the velocity of the two vehicles is determined at a plurality of measuring times n, and a mean value is formed from these values, and a duration of the overtaking manoeuvre or a relative velocity is determined by means of these mean values.

3. Method according to one of the preceding claims, wherein a display for the vehicle driver comprises a relative velocity and an anticipated overtaking period.

4. Method according to Claim 3, wherein the relative velocity and/or the anticipated overtaking period are calculated continuously.

5. Information system, for providing information to a vehicle driver about conditions of an imminent overtaking manoeuvre, wherein the means for measuring a velocity of a vehicle travelling ahead are provided, and in addition means for comparing a velocity of a vehicle of the vehicle driver are provided, and these velocities are compared with one another, and in addition means are provided which estimate and/or calculate an overtaking period, and means for directly displaying this overtaking period to a vehicle driver.

6. Computer programme product having programme parts for executing a method according to at least one of the preceding claims 1.

7. Machine-readable, in particular computer-readable data carrier, on which at least one computer programme product according to Claim 6 is recorded and/or stored.

## Revendications

1. Procédé d'information d'un conducteur de véhicule à propos de conditions d'une manoeuvre de dépassement prochaine, une vitesse d'un véhicule qui précède étant déterminée et comparée à une vitesse d'un véhicule du conducteur de véhicule, une durée de dépassement étant estimée et/ou calculée et celle-ci étant indiquée directement au conducteur de véhicule.

2. Procédé selon la revendication 1, la vitesse des deux véhicules étant déterminée à plusieurs instants de mesure n, une valeur moyenne étant formée à partir de ces valeurs et une durée de la manoeuvre de dépassement ou une vitesse relative étant déterminée à partir de ces valeurs moyennes.

3. Procédé selon l'une des revendications précédentes, une représentation pour le conducteur de véhicule comprenant une vitesse relative et une durée de dépassement probable.

4. Procédé selon la revendication 3, la vitesse relative et/ou la durée de dépassement probable étant calculées continuellement.

5. Système d'information destiné à informer un conducteur de véhicule à propos de conditions d'une manoeuvre de dépassement prochaine, des moyens étant présents pour mesurer une vitesse d'un véhicule qui précède et en outre des moyens pour comparer une vitesse d'un véhicule du conducteur de véhicule et ces vitesses étant comparées entre elles, et des moyens étant en outre présents qui estiment et/ou calculent une durée de dépassement ainsi que des moyens destinés à indiquer directement cette durée de dépassement à un conducteur de véhicule.

6. Produit de programme informatique possédant des parties de programme destinées à mettre en oeuvre un procédé selon au moins l'une des revendications précédentes 1.

7. Support de données lisible par machine, notamment lisible par ordinateur, sur lequel est enregistré et/ou mis en mémoire au moins un produit de programme informatique selon la revendication 6.
